# EUROPÄISCHE PATENTSCHRIFT

(11) **EP 1 366 789 B1**
(45) Veröffentlichungstag und Bekanntmachung des Hinweises auf die Patenterteilung: **20.06.2007**
(21) Anmeldenummer: 03009500.4
(22) Anmeldetag: 28.04.2003
(51) Int. Cl.: B01D 29/11

(54) **Filterpatrone für flüssige, einfriergefährdete Medien, insbesondere für den Einsatz bei Brennstoffzellenfahrzeugen und bei Verbrennungskraftmaschinen, vorzugsweise Dieselmotoren**
Filter cartridge (for liquids) which can be destroyed by freezing especially for fuel cell vehicles and combustion engines preferably diesel engines
Cartouche de filtre (pour liquides) qui peut etre détruite par congélation utilisable dans des véhicules à piles à combustiles et pour des moteures à combustion de préférence des moteurs Diesel

(30) Priorität: 10.05.2002 DE 10220662
(43) Veröffentlichungstag der Anmeldung: 03.12.2003
(73) Patentinhaber: Hydraulik-Ring GmbH, 97828 Marktheidenfeld (DE)
(72) Erfinder: Klotz, Stefan, 72631 Aichtal (DE); Maisch, Dieter, 72664 Kohlberg (DE)
(74) Vertreter: Cremer, Ulrike Theresia

(56) Entgegenhaltungen:
- EP-A- 0 663 226
- EP-A- 1 281 426
- DE-A- 10 052 103
- GB-A- 2 137 110
- US-A- 5 045 192

## Beschreibung

Die Erfindung betrifft eine Filterpatrone für flüssige, einfriergefährdete Medien, insbesondere für den Einsatz bei Brennstoffzellenfahrzeugen und bei Verbrennungskraftmaschinen, vorzugsweise Dieselmotoren, nach dem Oberbegriff des Anspruches 1.

Bei bekannten Filterpatronen dieser Art ist das Filterelement zwischen zwei Endscheiben des Filtereinsatzes angeordnet. Sie werden jeweils über einen Vorspannring axial gegenüber dem Filterelement vorgespannt, wenn der Filtereinsatz in das Filtergehäuse eingesetzt wird. Durch die Anlage der Vorspannringe am Gehäuse wird zwischen oberer und unterer Endscheibe ein Drehmoment aufgebaut, wodurch die Endscheiben gegeneinander verdrillt werden. Dadurch stellen sich die Filterelemente des Filtereinsatzes schräg, wodurch sie sich verkürzen. Dies bewirkt eine Reduzierung der axialen Vorspannung. Beim Durchströmen mit dem Medium wird ferner das Filterelement aufgeweitet, so daß es die axialen Vorspannkräfte, die zur Abdichtung erforderlich sind, nicht mehr aufbringen kann. Wenn sich das Filterelement wellt, wird die Länge der Filterpatrone verkürzt, was wiederum zu einer Reduzierung der axialen Vorspannkraft führen kann. Das Filterelement kann somit nicht mehr die Aussteifung der Filterpatrone einwandfrei gewährleisten.

Aus der EP-A-1 281 426 und der US-A-5 045 192 sind untere Enden für Filterpatronen mit zentralen Käfigen, durch die das zu filternde Öl hindurchströmen kann, bekannt, die mit einem "Snap-Fit-Interlock" den Stützkäfig mit der Endplatte so verbinden, dass der Käfig bzw. das zentrale Element rotatorisch freilaufend halten und so der Deckel nicht verwinden kann. Eine weitere Ausführungsform ist aus der EP 0 663 226 A1 bekannt, die wiederum mit einem durchlässigen Käfig für das Motorenöl arbeitet, in dessen Inneren ein geteilter, aber durchgehender, endlings verschraubter Stab vorhanden ist, der verklemmend auf dem Stützpunkt lagert.

Der Erfindung liegt die Aufgabe zugrunde, eine gefrierfähige Filterpatrone, insbesondere für Kraftfahrzeuge, zu schaffen, die mehrere Aufgaben gleichzeitig erfüllt. Der Filter soll sich beim Einbauten nicht verdrehen bzw. extrem axial gestaucht werden können und gleichzeitig darf das Einfrieren des zu filternden Mediums, wie zum Beispiel einer Harnstoff-Wasser-Lösung, keine Beschädigung an der Filtereinheit hervorrufen.

Diese Aufgaben werden bei einer Filterpatrone gemäß dem Gegenstand des Hauptanspruchs gelöst.

In Folge der erfindungsgemäßen Ausbildung nimmt das Versteifungsteil das beim Einschrauben des Filtereinsatzes in das Gehäuse auftretende Drehmoment und alle tragenden Funktionen auf und verhindert, dass das Filterelement bzw. dessen Filterpapierelemente verdreht werden. Dadurch bleibt die axiale Länge der Patrone unverändert, so dass eine einwandfreie axiale Abdichtung der Filterpatrone sichergestellt ist.

Das Versteifungsteil dient gleichzeitig als Füllstück. Das Füllstück durchsetzt den Innenraum des Filterelements. Das Versteifungsteil ist in einer massiven Art ausgestaltet. Der massive Teil des Versteifungsteils reduziert das mögliche Volumen, so dass durch das reduzierte Flüssigkeitsvolumen einhergehende Folgeprobleme beim Einfrieren vermieden werden.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt.
- Fig. 1: eine erfindungsgemäße Filterpatrone mit einem Filtereinsatz im Axialschnitt,
- Fig. 2: den Filtereinsatz gemäß Fig. 1 in vergrößerter Darstellung und im Axialschnitt,

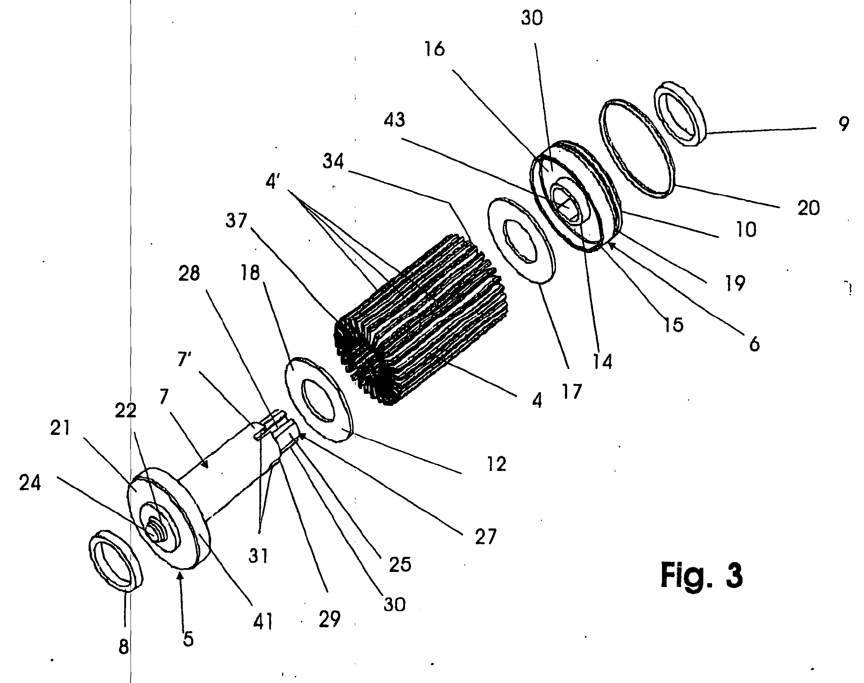

- Fig. 3: den Filtereinsatz nach Fig. 1 in Explosivdarstellung,
- Fig. 4: den Filtereinsatz nach Fig. 2 in perspektivischer Darstellung und in Ansicht gemäß Pfeil IV in Fig. 2,
- Fig. 5: den Filtereinsatz nach Fig. 2 in perspektivischer Darstellung und in Ansicht gemäß Pfeil V in Fig. 2.

Die Filterpatrone 1 eignet sich insbesondere für den Einsatz bei Brennkraftmaschinen, vorzugsweise für Dieselmotoren, bei denen zur Reinigung flüssiger, einfriergefährdeter Medien, wie insbesondere einer 32,5%igen wässrigen Harnstofflösung, solche Filterpatronen 1 eingesetzt werden.

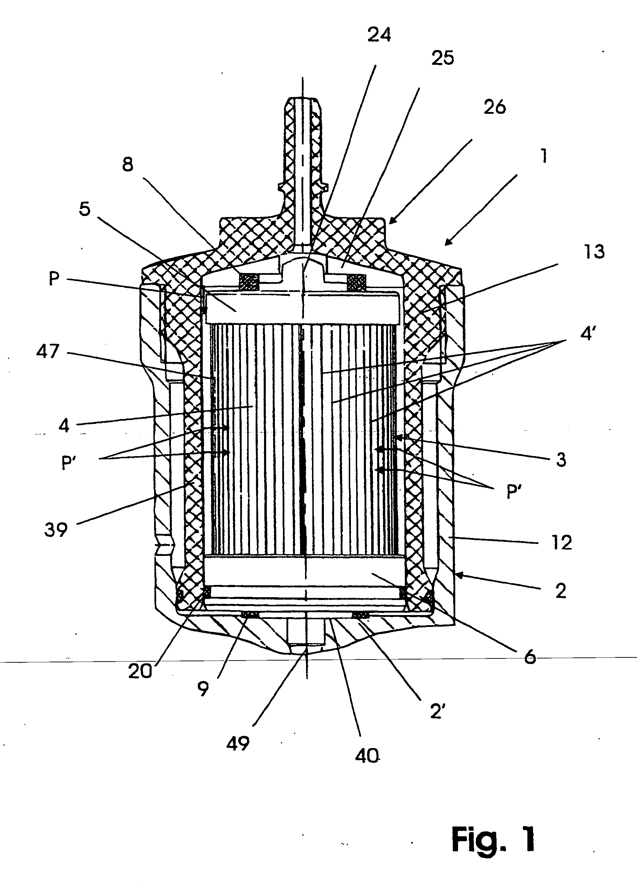

Die Filterpatrone 1 weist ein Filtergehäuse 2 mit einem Bodenteil 2' und einem Deckel 26 auf. Der Bodenteil 2' ist an einem Gehäuseteil 12 und der Deckel 26 an einem Gehäuseteil 13 vorgesehen. Der Gehäuseteil 12 wird auf den Gehäuseteil 13 geschraubt. Dabei wird ein im Gehäuse 2 untergebrachter Filtereinsatz 3 axial vorgespannt und axial sowie radial abgedichtet. Der Filtereinsatz 3 hat ein zylinderartiges Filterelement 4, das aus wenigstens einem ziehharmonikaartig gefalteten Filterpapier 4' besteht. Das Filterelement 4 ist mit seinem unteren Ende 34 und seinem oberen Ende 37 in Ringnuten 16 bzw. 32 einer unteren bzw. oberen Endscheibe 6 bzw. 5 jeweils unter Zwischenlage einer ringscheibenförmigen Klebefolie 17 bzw. 18 axial und radial gesichert. Die untere Endscheibe 6 ist eine Ringscheibe mit einem inneren hülsenförmigen Rand 14 und einem äußeren hülsenförmigen Rand 15, die koaxial zueinander über einen Boden bzw. die Innenseite 30 ragen. An ihr liegt die Klebefolie 17 an. Etwa in Höhe des Bodens 30 weist die Endscheibe 6 eine Umfangsnut 19 auf, in der bei montiertem Filtereinsatz 3 eine als O-Ring ausgebildete Dichtung 20 liegt, mit der der Filtereinsatz radial dichtend an einem zylindrischen Mantel 39 (Fig. 1) des Filtergehäuses 2 anliegt.

In der äußeren Stirnseite 10 weist die Endscheibe 6 eine Ringnut auf, in der ein Vorspannring 9 angeordnet ist, mit dem der Filtereinsatz 3 axial gegen einen Boden 40 des Gehäuseunterteiles 2' gepreßt wird.

Die andere, ebenfalls als Ringscheibe ausgebildete Endscheibe 5 weist ebenfalls einen umlaufenden buchsenförmigen Außenrand 41 auf, der zusammen mit einem stabartigen Füllstück 7 die Ringnut 32 zur Aufnahme des Filterelementes 37 und der Klebefolie 18 radial begrenzt. Das Füllstück 7 bildet ein Versteifungsteil für das Filterelement 4, durch dessen zentrale Öffnung 33 das Füllstück 7 ragt. Es ist im Ausführungsbeispiel einstückig mit der oberen Endscheibe 5 ausgebildet. Vorzugsweise sind sie als Kunststoffspritzteil konstruktiv einfach und kostengünstig hergestellt.

Die Endscheibe 5 weist an ihrer von der Endscheibe 6 abgewandten Seite einen vorspringenden, vorzugsweise ringförmigen Bund 22 auf, der eine koaxial zum Füllstück 7 liegende Umfangsnut 23 aufweist, in der ein Vorspannring 8 angeordnet ist. Er ist vorzugsweise gleich ausgebildet wie der Vorspannring 9 und steht axial über den Bund 22 über. Mit dem Vorspannring 8 stützt sich der Filtereinsatz 3 an der Innenseite des Gehäusedeckels 26 zur axialen Abdichtung ab. Über die Stirnseite 21 der Endscheibe 5 bzw. den Ringbund 22 ragt ein zentraler zapfenartiger Vorsprung 24 des Füllstückes 7, der sich geringfügig nach außen verjüngt und den Vorspannring 8 axial überragt. Mit diesem Vorsprung 24 ragt der Filtereinsatz 3 in montierter Lage zwischen Radialstege (Fig. 1), die von der Innenseite des Gehäusedeckels 26 abstehen, so daß der Filtereinsatz 3 radial gegenüber dem Gehäuse 2 ausgerichtet ist.

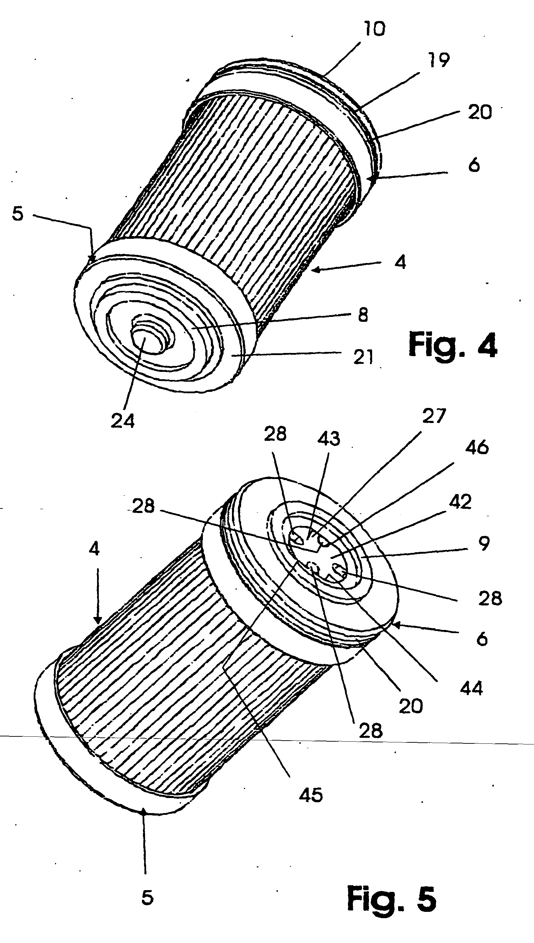

Wie insbesondere Fig. 5 zeigt, weist die Endscheibe 6 eine zentrale Öffnung 42 auf, die zwei diametral einander gegenüberliegende abgeflachte Randabschnitte 43 und 44 hat, die parallel zueinander verlaufen. Das verjüngte Ende 27 des Füllstückes 7 hat zwei entsprechend abgeflachte Umfangsabschnitte 45 und 46 (Fig. 5), die in montierter Lage an den Randabschnitt 43 bzw. 44 flächig anliegen. Auf diese Weise wird ein Verdrehen des Filterelementes 4 gegenüber dem Füllstück 7 einwandfrei verhindert.

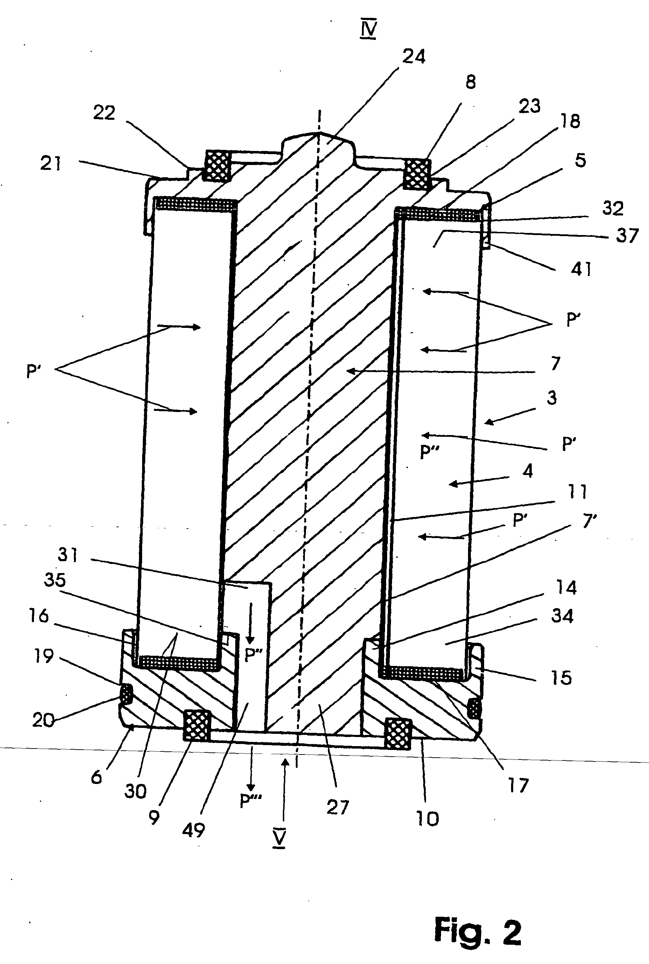

Das verjüngte Ende 27 des Füllstückes 7 weist im Ausführungsbeispiel vier mit gleichem umfangseitigen Abstand hintereinander liegende axiale Vertiefungen 28 auf. Der an den verjüngten Endabschnitt 27 anschließende Abschnitt 7' des Füllstückes 7 ist so profiliert, daß er wiederum vier mit gleichem umfangseitigem Abstand hintereinanderliegende axiale Vertiefungen 31 aufweist, die mit den Vertiefungen 28 des verjüngten Abschnittes 27 fluchten. Die Vertiefungen 31 erstrecken sich nur über eine relativ kurze Länge und bilden mit den Vertiefungen 28 Überströmkanäle für Flüssigkeit. Anstelle der beschriebenen Vertiefungen 28, 31 können auch Abflachungen am Außenmantel des Abschnittes 7' und des verjüngten Endes 27 vorgesehen sein, durch die ebenfalls Strömungsquerschnitte für die Flüssigkeit gebildet werden. Sie strömt in Pfeilrichtung P aus einem Ringraum 47 (Fig. 1), der zwischen dem Mantel 39 des Filtergehäuses 2 und dem Filterelement 4 gebildet ist, in Pfeilrichtung P' radial durch das Filterelement 4. Im Bereich zwischen dem Filterelement 4 und dem Füllstück 7 strömt die gefilterte Flüssigkeit in einem Ringraum 11 (Fig. 2) in Pfeilrichtung P". Vom Ringraum 11 gelangt die Flüssigkeit in die Überströmkanäle 28, 31, in denen sie in Pfeilrichtung P''' in Richtung auf einen Gehäuseablauf 49 (Fig. 1) strömt. In montierter Lage stützt sich die Endscheibe 6 mit einer Stirnseite 29 ihres inneren Randes 14 an einer zwischen dem verjüngten Ende 27 des Füllstückes 7 und dessen profiliertem Endabschnitt 7' gebildeten radialen Schulterfläche 35 axial ab.

Da das Füllstück 7 den sogenannten Filtertotraum, also den Innenraum des Filterelementes 4 durchsetzt, wird erreicht, daß darin nur so wenig Flüssigkeit vorhanden ist, daß eine beim Einfrieren durch die Filterpatrone fließende Flüssigkeit nur einer minimalen Volumenausdehnung ausgesetzt ist, die zu keiner Beeinträchtigung der Filtereigenschaften führen kann. Durch die Abstützung der Endscheibe 6 an der Ringschulter 35 des Füllstückes 7 wird erreicht, daß das Filterelement 4 seine axiale Länge beibehält. Der Filtereinsatz 3 liegt mit den Vorspannringen 8, 9 an der Innenseite des Gehäusedeckels 26 und am Boden des Gehäuseunterteiles 2'an. Werden die beiden Gehäuseteile 12, 13 unter Zwischenlage des Filtereinsatzes 3 zusammengeschraubt, wirkt über die vorzugsweise aus elastischem Material bestehenden Vorspannringe 8, 9 ein Drehmoment auf die Endscheiben 5, 6. Das profilierte Ende 27 des Füllstückes 7 nimmt beim Zusammenschrauben der beiden Gehäuseteile 12, 13 die dabei zwischen den beiden Endscheiben 5 und 6 auftretenden Drehmomente einwandfrei auf, so daß ein Verdrehen der Endscheiben gegeneinander und damit ein Verdrillen des Filterelementes 4 um seine Achse vermieden ist. Dadurch wird eine Verringerung der axialen Vorspannkraft verhindert. Durch das Füllstück 7 kann das Filterelement 4 nicht übermäßig aufweichen, so daß auch dadurch keine Verringerung der axialen Vorspannkraft auftreten kann, die zu einer Beeinträchtigung der Abdichtung des Filtereinsatzes 3 in der Filterpatrone 1 führen könnte. Da das Füllstück 7 das Filterelement 4 aussteift, wird dieses entlastet. Alle tragenden Funktionen werden von dem Füllstück mit der oberen Endscheibe 5 übernommen.

## Patentansprüche

1. Filterpatrone (1) für flüssige, einfriergefährdete Medien, insbesondere für den Einsatz bei Brennstoffzellenfahrzeugen und bei Verbrennungskraftmaschinen, vorzugsweise Dieselmotoren, mit einem Gehäuse (2), das mit einem Filterdeckel(26) verschließbar und in dem ein Filtereinsatz (3) mit mindestens einem Filterelement (4) angeordnet ist, das zwischen Endteilen (5, 6) liegt und mit mindestens einem Vorspannteil (8, 9) axial vorgespannt ist,
**dadurch gekennzeichnet, daß** das Filterelement (4) mindestens ein Versteifungsteil (7) aufweist, das als Füllstück den Innenraum (11) des Filterelementes (4) durchsetzt, daß es das Filterelement (4) versteift, und daß das Versteifungsteil (7) als Massivteil mit den Endteilen (5, 6) verbunden ist.

2. Filterpatrone nach Anspruch 1,
**dadurch gekennzeichnet, daß** das Versteifungsteil (7) ein verjüngtes Ende (27) aufweist, an das vorteilhaft ein profilierter Endabschnitt (7') anschließt.

3. Filterpatrone nach Anspruch 2,
**dadurch gekennzeichnet, daß** der Endabschnitt (7') und/oder das verjüngte Ende (27) jeweils mindestens eine etwa axial verlaufende Vertiefung (28, 31) oder wenigstens eine Abflachung zur Bildung eines Strömungsquerschnittes aufweist.

4. Filterpatrone nach Anspruch 3,
**dadurch gekennzeichnet, daß** der Endabschnitt (7') und/oder das verjüngte Ende (27) des Versteifungsteiles (7) jeweils vorzugsweise vier mit gleichem umfangsseitigen Abstand hintereinander liegende Vertiefungen (28, 31) aufweist.

5. Filterpatrone nach einem der Ansprüche 2 bis 4,
**dadurch gekennzeichnet, daß** die Vertiefungen (28) des verjüngten Endes (27) des Versteifungsteiles (7) mit den Vertiefungen (31) des Endabschnittes (7') fluchten, derart, daß Überströmkanäle gebildet sind, die vorteilhaft mit mindestens einem Strömungskanal (11) zwischen dem Versteifungsteil (7) und dem Filterelement (4) strömungsverbunden sind.

6. Filterpatrone nach einem der Ansprüche 1 bis 5,
**dadurch gekennzeichnet, daß** sich das eine Endteil (6) axial an einer zwischen dem verjüngten Ende (27) und dem Profilabschnitt (7') des Versteifungsteiles (7) gebildeten Ringschulter (35) abstützt,und daß vorteilhaft das verjüngte Ende (27) des Versteifungsteiles (7) mindestens einen, vorzugsweise zwei diametral einander gegenüberliegende Abflachungen (45, 46) aufweist.

7. Filterpatrone nach einem der Ansprüche 2 bis 6,
**dadurch gekennzeichnet, daß** das verjüngte Ende (27) des Versteifungsteiles (7) mit seinen Abflachungen (45, 46) an entsprechenden Abflachungen (43, 44) einer Innenwand des einen Endteiles (6) zur Verdrehsicherung anliegt.

8. Filterpatrone nach einem der Ansprüche 1 bis 7,
**dadurch gekennzeichnet, daß** das vorzugsweise aus Filterpapier (4') bestehende Filterelement (4) mit seinen Enden (34, 37) in jeweils eine Ringnut (16, 32) des Endteiles (5 und 6) ragt.

9. Filterpatrone nach Anspruch 8,
**dadurch gekennzeichnet, daß** die Enden (34, 37) des Filterelementes (4) unter Zwischenlage jeweils mindestens einer Klebefolie (17, 18) am Boden der Ringnuten (16, 32) der Endteile (5, 6) axial abgestützt sind.

10. Filterpatrone nach einem der Ansprüche 1 bis 9,
**dadurch gekennzeichnet, daß** die vorteilhaft als Ringteile ausgebildeten Endteile (5, 6) jeweils einen stirnseitigen Vorspannring (8, 9) zur axialen Abdichtung am Gehäuse (2) aufweisen.

11. Filterpatrone nach einem der Ansprüche 1 bis 10,
**dadurch gekennzeichnet, daß** der am Versteifungsteil (7) axial abgestützte Endteil (6) mindestens eine in einer Umfangsnut (19) angeordnete Dichtung (20) zur radialen Abdichtung gegenüber dem Gehäuse (2) aufweist.

12. Filterpatrone nach einem der Ansprüche 1 bis 11,
**dadurch gekennzeichnet, daß** der andere Endteil (5) einen axial vorspringenden Ansatz (24) aufweist.

13. Filterpatrone nach einem der Ansprüche 1 bis 12,
**dadurch gekennzeichnet, daß** das vorteilhaft runden Querschnitt aufweisende Versteifungsteil (7) einstückig mit dem einen Endteil (5) ausgebildet ist, das wie das Versteifungsteil (7) vorteilhaft als Kunststoffspritzteil ausgebildet ist.

14. Filterpatrone nach einem der Ansprüche 1 bis 13,
**dadurch gekennzeichnet, daß** der Außendurchmesser des Versteifungsteiles (7) geringfügig kleiner ist als die lichte Weite der zentralen Öffnung (37) des Filterelementes (4).

## Claims

1. A filter cartridge (1) for liquid media at risk of freezing, in particular for use in fuel cell vehicles and in internal combustion engines, preferably diesel engines, having a housing (2), which may be closed with a filter lid (26) and in which a filter insert (3) with at least one filter element (4) is arranged, which is located between end parts (5, 6) and is axially pre-stressed with at least one pre-stressing part (8, 9), **characterised in that** the filter element (4) comprises at least one stiffening part (7), which passes through the interior (11) of the filter element (4) as a filler piece, **in that** it stiffens the filter element (4) and **in that** the stiffening part (7) is connected as a solid part to the end parts (5, 6).

2. A filter cartridge according to claim 1, **characterised in that** the stiffening part (7) comprises a tapered end (27), which is advantageously adjoined by a profiled end portion (7').

3. A filter cartridge according to claim 2, **characterised in that** the end portion (7') and/or the tapered end (27) in each case comprise at least one approximately axially extending recess (28, 31) or at least one flat part to form a flow cross-section.

4. A filter cartridge according to claim 3, **characterised in that** the end portion (7') and/or the tapered end (27) of the stiffening part (7) in each case preferably comprise four recesses (28, 31) located one after the other with identical circumferential spacing.

5. A filter cartridge according to any one of claims 2 to 4, **characterised in that** the recesses (28) of the tapered end (27) of the stiffening part (7) are aligned with the recesses (31) in the end portion (7') in such a way that overflow channels are formed, which are advantageously connected for flow to at least one flow channel (11) between the stiffening part (7) and the filter element (4).

6. A filter cartridge according to any one of claims 1 to 5, **characterised in that** the one end part (6) rests axially against an annular shoulder (35) formed between the tapered end (27) and the profiled portion (7') of the stiffening part (7) and **in that** advantageously the tapered end (27) of the stiffening part (7) comprises at least one, preferably two diametrically opposed flat parts (45, 46).

7. A filter cartridge according to any one of claims 2 to 6, **characterised in that** the tapered end (27) of the stiffening part (7) lies with its flat parts (45, 46) against corresponding flat parts (43, 44) of an inner wall of the one end part (6) for anti-twist protection.

8. A filter cartridge according to any one of claims 1 to 7, **characterised in that** the filter element (4), preferably consisting of filter paper (4'), projects with each of its ends (34, 37) into an annular groove (16, 32) in the end part (5 and 6).

9. A filter cartridge according to claim 8, **characterised in that** the ends (34, 37) of the filter element (4) rest axially against the base of the annular grooves (16, 32) in the end parts (5, 6) with the interposition of in each case at least one adhesive film (17, 18).

10. A filter cartridge according to any one of claims 1 to 9, **characterised in that** the end parts (5, 6) advantageously constructed as annular parts each comprise a pre-stressing ring (8, 9) on the end face for axial sealing relative to the housing (2).

11. A filter cartridge according to any one of claims 1 to 10, **characterised in that** the end part (6) resting axially on the stiffening part (7) comprises at least one seal (20) arranged in a circumferential groove (19) for radial sealing relative to the housing (2).

12. A filter cartridge according to any one of claims 1 to 11, **characterised in that** the other end part (5) comprises an axially projecting nose (24).

13. A filter cartridge according to any one of claims 1 to 12, **characterised in that** the stiffening part (7) advantageously having a round cross-section is of one piece construction with the one end part (5), which, like the stiffening part (7), advantageously takes the form of a plastics injection moulding.

14. A filter cartridge according to any one of claims 1 to 13, **characterised in that** the outer diameter of the stiffening part (7) is slightly smaller than the clear width of the central opening (37) of the filter element (4).

## Revendications

1. Cartouche de filtre (1) pour des liquides pouvant être détruits par congélation, utilisable notamment dans des véhicules à pile combustible et dans des moteurs à combustion, de préférence des moteurs Diesel, avec un carter (2) pouvant être fermé par un cache-filtre (26) et dans lequel est disposé un insert filtrant (3) muni d'au moins un élément filtrant (4) reposant entre les parties terminales (5, 6) et étant précontraint dans le plan axial à l'aide d'au moins une partie précontraignante (8, 9),
**caractérisée en ce que** l'élément filtrant (4) présente au moins une partie de renfort (7) qui remplit sous la forme d'une pièce de remplissage l'espace intérieur (11) de l'élément filtrant (4), **en ce qu'**il renforce l'élément filtrant (4) et **en ce que** la partie de renfort (7) prenant la forme d'une pièce massive est reliée aux parties terminales (5, 6).

2. Cartouche de filtre selon la revendication 1,
**caractérisée en ce que** la partie de renfort (7) présente une extrémité effilée (27) sur laquelle se raccorde de façon avantageuse une section terminale profilée (7').

3. Cartouche de filtre selon la revendication 2,
**caractérisée en ce que** la section terminale (7') et/ou l'extrémité effilée (27) présentent respectivement au moins un renfoncement (28, 31) s'étendant approximativement dans le plan axial ou au moins un méplat servant à former une section transversale d'écoulement.

4. Cartouche de filtre selon la revendication 3,
**caractérisée en ce que** la section terminale (7') et/ou l'extrémité effilée (27) de la partie de renfort (7) présentent respectivement de préférence quatre renforts (28, 31) reposant les uns en dessous des autres à équidistance dans le plan périphérique.

5. Cartouche de filtre selon l'une quelconque des revendications 2 à 4,
**caractérisée en ce que** les renforts (28) de l'extrémité effilée (27) de la partie de renfort (7) s'alignent avec les renforts (31) de la section terminale (7') de manière à former des canaux de trop-plein qui sont de façon avantageuse reliés du point de vue de l'écoulement de liquide avec au moins un canal d'écoulement (11) situé entre la partie de renfort (7) et l'élément filtrant (4).

6. Cartouche de filtre selon l'une quelconque des revendications 1 à 5,
**caractérisée en ce que** la partie terminale (6) s'appuie dans le plan axial sur un épaulement annulaire (35) formé entre l'extrémité effilée (27) et le segment profilé (7') de la partie de renfort (7) et **en ce que** de façon avantageuse l'extrémité effilée (27) de la partie de renfort (7) présente au moins un, de préférence deux méplats (45, 46) diamétralement opposés.

7. Cartouche de filtre selon l'une quelconque des revendications 2 à 6,
**caractérisée en ce que** l'extrémité effilée (27) de la partie de renfort (7) repose avec ses méplats (45, 46) sur les méplats (43, 44) correspondants d'une paroi intérieure de la partie terminale (6) pour empêcher toute torsion.

8. Cartouche de filtre selon l'une quelconque des revendications 1 à 7,
**caractérisée en ce que** l'élément filtrant (4) composé de préférence d'un papier filtre (4') fait respectivement saillie avec ses extrémités (34, 37) dans une rainure annulaire (16, 32) des parties terminales (5 et 6).

9. Cartouche de filtre selon la revendication 8,
**caractérisée en ce que** les extrémités (34, 37) de l'élément filtrant (4) sont supportées dans le plan axial sous la couche intermédiaire d'au moins respectivement une feuille de collage (17, 18) au niveau du fond des rainures annulaires (16, 32) des parties terminales (5, 6).

10. Cartouche de filtre selon l'une quelconque des revendications 1 à 9,
**caractérisée en ce que** les parties terminales (5, 6) prenant de façon avantageuse la forme de pièces annulaires présentent respectivement une bague de précontrainte (8, 9) sur la face avant pour l'étanchéité axiale du carter (2).

11. Cartouche de filtre selon l'une quelconque des revendications 1 à 10,
**caractérisée en ce que** la partie terminale (6) s'appuyant dans le plan axial sur la partie de renfort (7) présente au moins un joint d'étanchéité (20) disposé dans une rainure périphérique (19) pour l'étanchéité radiale du carter (2).

12. Cartouche de filtre selon l'une quelconque des revendications 1 à 11,
**caractérisée en ce que** l'autre partie terminale (5) présente une saillie (24) précontrainte dans le plan axial.

13. Cartouche de filtre selon l'une quelconque des revendications 1 à 12,
**caractérisée en ce que** la partie de renfort (7) présentant de façon avantageuse une section transversale ronde est réalisée en une pièce avec la partie terminale (5) prenant la forme, comme la partie de renfort (7) de façon avantageuse, d'une pièce moulée par injection en matière synthétique.

14. Cartouche de filtre selon l'une quelconque des revendications 1 à 13,
**caractérisée en ce que** le diamètre extérieur de la partie de renfort (7) est légèrement inférieur à l'espace libre de l'ouverture centrale (37) de l'élément filtrant (4).
